# EUROPEAN PATENT SPECIFICATION

(11) **EP 2 885 518 B1**
(45) Date of publication and mention of the grant of the patent: **03.10.2018**
(21) Application number: 13829397.2
(22) Date of filing: 13.08.2013
(51) Int. Cl.: F02C 7/00, F01D 5/00, C23C 28/00, F01D 5/28

(54) **THERMAL BARRIER COATING HAVING OUTER LAYER**
WÄRMEDÄMMSCHICHT MIT AUSSENSCHICHT
REVÊTEMENT FORMANT BARRIÈRE THERMIQUE AYANT UNE COUCHE EXTERNE

(30) Priority: 15.08.2012 US 201213586099
(43) Date of publication of application: 24.06.2015
(73) Proprietor: United Technologies Corporation, Farmington, CT 06032 (US)
(72) Inventor: STROCK, Christopher W., Kennebunk, Maine 04043 (US); MALONEY, Michael, Marlborough, Connecticut 06447 (US); LITTON, David A., West Hartford, Connecticut 06107 (US); ZIMMERMAN, Benjamin Joseph, Moseley VA 23120 (US); HAZEL, Brian T., Avon, Connecticut 06001 (US)
(74) Representative: Dehns
(86) International application number: PCT/US2013/054614
(87) International publication number: WO 2014/028419

(56) References cited:
- EP-A1- 2 341 166
- WO-A1-2007/112783
- US-A- 4 299 865
- US-A- 4 405 284
- US-A1- 2003 138 658
- US-A1- 2005 048 305
- US-A1- 2005 136 249
- US-A1- 2006 246 319
- US-A1- 2011 151 132
- US-B2- 6 627 323
- US-B2- 6 794 059
- US-B2- 6 794 059
- US-B2- 8 021 742
- US-B2- 8 021 742

## Description

### BACKGROUND

This disclosure relates generally to a gas turbine engine, and more particularly to a thermal barrier coating (TBC) that can be applied to a component of a gas turbine engine.

Gas turbine engines typically include a compressor section, a combustor section and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

Some gas turbine engine components, including blades, vanes, blade outer air seals (BOAS) and combustor panels, may operate in relatively harsh environments. For example, blade and vane airfoils of the compressor and turbine sections may operate under a variety of high temperatures and high thermal stresses. A thermal barrier coating (TBC) may be deposited on such components to protect the underlying substrates of the components from thermal fatigue and enable higher operating conditions.

Particulate debris that is ingested or liberated from an upstream part during engine operation may collide with the TBC during an impact event. The particulate debris (sometimes referred to as foreign object damage (FOD) or domestic object debris (DOD)) may strike components positioned in the gas path of the gas turbine engine, potentially reducing the durability of the TBC and part life.

A prior art abradable ceramic seal and method of making the same having the features of the preamble of claim 1 is disclosed in US 4 299 865 A. A prior art layer system is disclosed in EP 2341166 A1. A prior art method of coating articles adapted for exposure to high temperatures is disclosed in US 2011/0151132 A2.

### SUMMARY

The present invention provides a component as recited in claim 1.

In a further non-limiting embodiment of any of the foregoing components, the material may include a high toughness composition.

In a further non-limiting embodiment of any of the foregoing components, the material may include hafnia.

In a further non-limiting embodiment of any of the foregoing components, the material may include a zirconia based ceramic material.

In a further non-limiting embodiment of any of the foregoing components, the outer layer is a suspension plasma sprayed (SPS) outer layer.

In a further non-limiting embodiment of any of the foregoing components, at least a portion of the outer layer is deformed in response to the impact event.

In a further non-limiting embodiment of any of the foregoing components, a portion of the outer layer is crushed in response to the impact event.

In a further non-limiting embodiment of any of the foregoing components, a portion of the outer layer is liberated in response to the impact event.

In a further non-limiting embodiment of any of the foregoing components, the outer layer may include a varied composition and structure throughout its thickness.

In a further non-limiting embodiment of any of the foregoing components, the outer layer is deposited at least on one of a leading edge and a trailing edge of the substrate.

The present invention also provides a method of coating a component as recited in claim 10.

In a further non-limiting embodiment of any of the foregoing methods of coating a component, the method may comprise the step of deforming at least a portion of the outer layer in response to the impact event.

In a further non-limiting embodiment of any of the foregoing methods of coating a component, the method may comprise the step of crushing at least a portion of the outer layer in response to the impact event.

In a further non-limiting embodiment of any of the foregoing methods of coating a component, the method may comprise the step of liberating at least a portion of the outer layer in response to the impact event.

In a further non-limiting embodiment of any of the foregoing methods of coating a component, the suspension plasma spray technique may include applying the outer layer in a plurality of individual coating passes. A first coating pass of the plurality of individual coating passes includes a first material process parameter and composition and a second coating pass of the plurality of individual coating passes includes a second material process parameter and composition that is different from the first material process parameter and composition.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 illustrates a schematic, cross-sectional view of a gas turbine engine.
Figure 2 illustrates a component that can be incorporated into a gas turbine engine.
Figure 3 illustrates a portion of a component that includes a thermal barrier coating (TBC).
Figure 4 illustrates a portion of an outer layer that can be deposited over a TBC to protect the TBC during an impact event.

### DETAILED DESCRIPTION

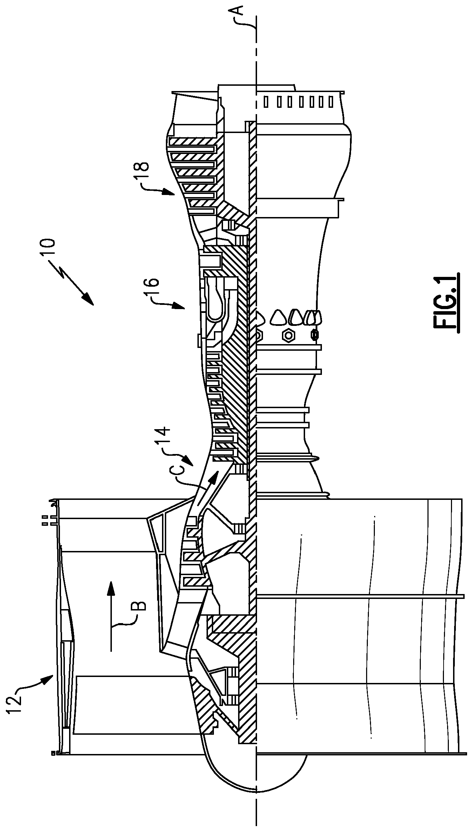

Figure 1 illustrates an exemplary gas turbine engine 10 that is circumferentially disposed about an engine centerline axis A. The gas turbine engine 10 includes a fan section 12, a compressor section 14, a combustor section 16 and a turbine section 18. Generally, during operation, the fan section 12 drives air along a bypass flow path B, while the compressor section 14 drives air along a core flow path C for compression and communication into the combustor section 16. The hot combustion gases generated in the combustor section 16 are discharged through the turbine section 18, which extracts energy from the combustion gases to power other gas turbine engine loads. Although depicted as a turbofan gas turbine engine in the disclosed non-limiting embodiment, it should be understood that the concepts described herein are not limited to turbofan engines and these teachings could extend to other types of engines, including but not limited to, three spool engine architectures.

The gas turbine engine 10 may include a plurality of components that are generally disposed within the core flow path C and therefore are exposed to relatively harsh operating conditions. Examples of such components include, but are not limited to, blades, vanes, blade outer air seals (BOAS), combustor panels, airfoils and other components. Components of these types may be exposed to foreign object debris (FOD), domestic object debris (DOD) or other similar particulate debris.

For example, the gas turbine engine 10 may ingest dirt or particles that can ballistically strike a component during operation. Such an impact event may induce damage such as abrasion or fracture of a thermal barrier coating (TBC) deposited on the component and/or the component itself. In addition, particles may be liberated from upstream components of the gas turbine engine as a result of spallation (removal of coating) or an abradable rub event. Other impact conditions may also exist during gas turbine engine operation. Any TBC coated component subject to FOD or DOD can include an outer layer that provides improved resistance during impact events, as is further discussed below.

The impact events discussed herein can include high energy events (such as from large particles) or low energy events (such as from small particles). For example, during high energy events, the large particles can cause a ballistic impact at the location of the strike and may often strike at large angles relative to the surface. During low energy events, the small particles may strike the strike the surface at shallow angles. The difference between high energy events and low energy events is therefore related to the depth of material affected by the impact event. High energy events will translate down to the base of the TBC affecting the whole of the component, while low energy events may result in a damaged zone that is isolated to the near surface (i.e., erosion).

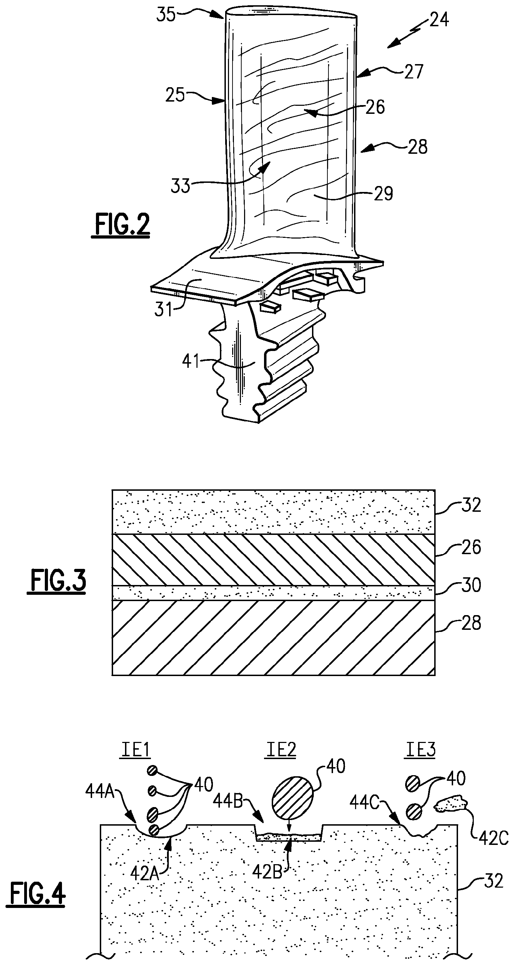

Figure 2 illustrates an exemplary component 24 that can be incorporated into a gas turbine engine, such as the gas turbine engine 10 of Figure 1. It should be understood that this disclosure is not necessarily limited to gas turbine engine components and may extend to other components, including but not limited to coal gasification nozzles. In this exemplary embodiment, the component 24 is a blade that can be incorporated into the core flow path C of either the compressor section 14 or the turbine section 18 of the gas turbine engine 10. However, the component 24 could also be a vane, a combustor panel, a blade outer air seal (BOAS), or any other component of the gas turbine engine 10. The component 24 may be formed of a superalloy material, such as a nickel based alloy, a cobalt based alloy, molybdenum, niobium, or other materials including ceramics or ceramic or metal matrix composites. Given this description, a person of ordinary skill in the art would recognize other types of alloys to suit a particular need.

The component 24 includes a leading edge 25, a trailing edge 27 and an airfoil portion 29 that extends between the leading edge 25 and the trailing edge 27. The airfoil portion 29 extends from a platform portion 31 that includes a blade root 41. The platform portion 31 forms the inner gas path surface of the component 24. The blade root 41 can include a dovetail configuration for mounting the component 24 to a disk, casing or other structure of the gas turbine engine 10 to position the airfoil portion 29 within the core flow path C. The airfoil portion 29 includes a pressure side 33 (concave side) and a suction side 35 (convex side).

The component 24 can also include a thermal barrier coating (TBC) 26 for protecting an underlying substrate 28 of the component 24. The thermal barrier coating 26 may be deposited on all or a portion of the substrate 28 to protect the substrate 28 from heat loads and the associated thermal fatigue and other forms of degradation. The thermal barrier coating 26 may comprise one or more layers of a ceramic material such as a yttria stabilized zirconia material or a gadolinia stabilized zirconia material. Other TBC materials are also contemplated as within the scope of this disclosure.

In the exemplary embodiment illustrated by Figure 2, the airfoil portion 29 represents the substrate 28 of the component 24. Alternatively, the substrate 28 may be the platform portion 31, a combination of the platform portion 31 and the airfoil portion 29, or any other portion of the component 24.

Referring to Figure 3, the TBC 26 can be deposited on at least a portion of the substrate 28. Optionally, a bond coat 30 may be deposited between the TBC 26 and the substrate 28 to facilitate bonding between the TBC 26 and the substrate 28. It should be understood that the various thicknesses of the TBC 26, the bond coat 30 and any other layers included on the substrate 28 are not necessarily shown to the scale they would be in practice. Rather, these features are shown exaggerated to better illustrate the various features of this disclosure.

In one exemplary embodiment, the bond coat 30 is a metallic bond coat such as an overlay bond coat or a diffusion aluminide. The bond coat 30 may be a metal-chromium-aluminum-yttrium layer ("MCrAlY"), or an aluminide or platinum aluminide, or a lower-aluminum gamma/gamma prime-type coating. The bond coat 30 may further include a thermally grown oxide (not shown) for further enhancing bonding between the layers. One exemplary bond coat 30 is PWA 1386 NiCoCrAlYHfSi. Alternative bond coats 30 are gamma/gamma prime and NiAlCrX bondcoats.

The bond coat 30 can embody a variety of thicknesses. One exemplary bond coat 30 thicknesses is in the range of 2 to 500 micrometers. Another exemplary bond coat 30 thickness is in the range of 12 to 250 micrometers. Yet another exemplary bond coat 30 thickness is in the range of 25 to 150 micrometers.

An outer layer 32 can also be deposited onto at least a portion of the TBC 26 on an opposite side of the TBC 26 from the substrate 28. The outer layer 32 is designed to protect the TBC 26 during particulate impact events. Particulate impact events can occur in response to FOD or DOD striking the substrate 28 during engine operation. The FOD or DOD are typically ingested or liberated dirt or particles that are communicated through the core flow path C.

In one exemplary embodiment, the thermal barrier coating 26 includes a first porosity and the outer layer 32 includes a second porosity that is greater than the first porosity. For example, the TBC 26 may include a first porosity in the range of 5 to 30 volume percent, and the outer layer 32 may include a second porosity in the range of 15 to 65 volume percent.

The outer layer 32 can further include a reduced density (in terms of percentage of theoretical density) and reduced modulus of elasticity compared to the TBC 26. The lower density material of the outer layer 32 can be deformed or crushed during an impact event by FOD or DOD, thereby absorbing energy and preventing the initiation of cracks and chips in the underlying TBC 26. The TBC 26 may include a first density in the range of 5 to 30 volume percent, and the outer layer 32 may include a second density in the range of 15 to 65 volume percent. Moreover, the TBC 26 may include a first modulus of elasticity in the range of 10 to 50 Mega-Pascals (MPa), while the outer layer 32 may include a second modulus of elasticity in the range of 1 to 30 MPa. In one exemplary embodiment, the TBC 26 may have a first modulus of elasticity in the range of 10 to 30 MPa, while the outer layer 32 includes a second modulus of elasticity in the range of 1 to 20 MPa.

The resulting structure of the outer layer 32 acts as an impact resistant, energy absorbing layer that prevents the initiation of cracks and chips in the underlying TBC 26. For example, the outer layer 32 may include a material that is capable of absorbing energy and acting as a sacrificial layer in response to an impact event, such as a high energy ballistic strike caused by FOD or DOD. In one example, the material of the outer layer 32 includes a high toughness composition of a zirconia based ceramic material. In another example, the material includes hafnia. In yet another example, the material includes an alumina based ceramic material.

The outer layer 32 can be disposed over a portion of the TBC 26. For example, the outer layer 32 could be applied over the TBC 26 at the leading edge 25 of a component 24 (See Figure 2). For example, the leading edge of a blade may have a high probability for high energy impact events). In additional exemplary embodiments, the outer layer 32 can be applied over the TBC 26 at the pressure side 33, the trailing edge 27 (which may be subject to ricochet particulate strikes between rotating and non-rotating parts), or any other portion or combination of portions of the component 24 (See Figure 2). It should also be understood that the outer layer 32 could be applied to any portion of any component that is disposed within the core flow path C and that may be subject to an impact event. Alternatively, the outer layer 32 can be deposited over an entire surface area of the TBC 26. In other words, the outer layer 32 can partially or entirely encompass the TBC 26. The interface between the TBC 26 and the outer layer 32 can be graded (i.e., gradual change from one material to the other) or distinct.

Both the TBC 26 and the outer layer 32 can be applied to the component 24 using the same application technique and same equipment. One exemplary application technique includes a suspension plasma spray (SPS) technique. The SPS technique enables a homogenous coating composition of multi-component ceramics that have varied vapor pressures because it relies on melting/softening of the ceramic and not vaporization during the transport to the substrate 28. In one exemplary SPS technique, a feedstock is dispersed as a suspension in a fluid, such as ethanol, and injected wet into the gas stream. Splat sizes in the SPS technique with micron or submicron powder feedstock may be about ½ micron to about 3 microns in diameter and may include thicknesses of less than a micron. The resulting microstructures in the SPS technique deposited layers have features that are much smaller than conventional plasma sprayed microstructures. These smaller features are achieved with the SPS technique as compared to the conventional powder feed air plasma spray process thereby providing a high density of splat interfaces and a tortuous path for crack propagation attributing to the high toughness characteristics of the outer layer 32.

In another exemplary SPS technique, the thermal barrier coating 26 and the outer layer 32 can be deposited in a manner that varies both the composition and structure of the coatings to provide deposited coatings having different microstructures. One example of such a SPS technique is disclosed in Kassner, et al., Journal of Thermal Spray Technology, Volume 17, pp. 115-123 (March, 2008). This reference is incorporated herein in its entirety. Another example SPS technique that can be used is disclosed by Trice, et al., Journal of Thermal Spray Technology, Volume 20, p. 817 (2011), which is also incorporated herein by reference.

Both the TBC 26 and the outer layer 32 can be applied with varying parameters and compositions in a plurality of individual coating passes using a SPS technique. For example, a first coating pass of the plurality of individual coating passes can include a first material process parameter and composition and a second coating pass of the plurality of individual coating passes can include a second material process parameter and composition that is different from the first material parameter and composition. The term "material process parameter" can include, but is not limited to, parameters such as suspension feed rate, stand-off distance, solid loading in suspension, deposition angle and article rotation angle. The term "composition" refers to the chemical composition of the materials making up the various individual coating passes. Each individual coating pass can be different from other layers in physical, thermal and optical properties. In this manner, each individual coating pass can be applied with its own unique porosity, toughness, density, hardness, thermal conductivity, reflectivity, emissivity and/or modulus of elasticity such that the outer layer 32 can include a varied composition and structure throughout its thickness. In one exemplary embodiment, each individual coating pass can be between 1 to 25 microns in thickness. In one example implementation, the TBC 26 is a columnar microstructure with defined gaps or cracks to provide strain tolerance for cyclic durability and the outer layer 32 is either a high density or a low density structure. High density structures resist low energy impact events and low density structures can absorb the energy associated with high energy impact events.

Figure 4 illustrates a portion of an exemplary outer layer 32. The material of the outer layer 32 is designed to be a lower density material as compared to the TBC 26 such that the outer layer 32 is deformed in response to an impact event between particulate debris 40 and the outer layer 32 during operation of the gas turbine engine 10.

For example, during a first impact event IE1, a first portion 42A of the outer layer 32 may absorb the energy of a ballistic strike between particulate debris 40 and a first region 44A of the outer layer 32 by deforming. In addition, during a second impact event IE2, a second portion 42B of the outer layer 32 may be crushed in response to an impact event caused by particulate debris 40 striking a second region 44B of the outer layer 32. In yet another exemplary embodiment, a third portion 42C may be liberated from the outer layer 32 in response to a third impact event IE3 caused by particulate debris 40 striking a third region 44C of the outer layer 32.

In yet another embodiment, the outer layer 32 may resist an impact event, such as a lower energy impact event. The resistant outer layer 32 may cause particulate debris to ricochet off of the outer layer 32. It should be understood that any portion of the outer layer 32 may be deformed, crushed, liberated, sacrificed in response to, or resist an impact event, to prevent such energy from impacting the TBC 26. It should also be understood that the various exemplary impact events IE1, IE2 and IE3 are not to scale and may be shown in an exaggerated form to better illustrate the energy absorbing properties of the outer layer 32.

Furthermore, in response to a low energy impact event, the outer layer 32 may act as a resistance layer to absorb the energy of the low energy impact event. In one embodiment, the outer layer at least partially erodes in response to a low energy impact event.

Although the different non-limiting embodiments are illustrated as having specific components, the embodiments of this disclosure are not limited to those particular combinations. It is possible to use some of the components or features from any of the non-limiting embodiments in combination with features or components from any other non-limiting embodiments.

It should be understood that like reference numerals identify corresponding or similar elements within the several drawings. It should also be understood that although a particular component arrangement is disclosed and illustrated in these exemplary embodiments, other arrangements could also benefit from the teachings of this disclosure.

The foregoing description shall be interpreted as illustrative and not in any limiting sense. A worker of ordinary skill in the art would recognize that various modifications could come within the scope of this disclosure. For these reasons, the following claims should be studied to determine the true scope and content of this disclosure.

## Claims

1. A component (24), comprising:
a substrate (28);
a thermal barrier coating (26) deposited on at least a portion of said substrate (28); and
an outer layer (32) deposited on at least a portion of said thermal barrier coating (26), wherein said outer layer (32) includes a material that absorbs energy in response to an impact event along at least a portion of said outer layer (32);
said thermal barrier coating (26) includes a first porosity and said outer layer (32) includes a second porosity that is greater than said first porosity,
**characterised in that**:
said thermal barrier coating (26) includes a first modulus of elasticity and said outer layer (32) includes a second modulus of elasticity that is a reduced modulus of elasticity as compared to said first modulus of elasticity; and
said outer layer (32) is a suspension plasma sprayed (SPS) outer layer.

2. The component (24) as recited in claim 1, wherein said material includes a high toughness composition.

3. The component (24) as recited in claim 1 or 2, wherein said material includes hafnia.

4. The component (24) as recited in any preceding claim, wherein said material includes a zirconia based ceramic material.

5. The component (24) as recited in any preceding claim, wherein at least a portion of said outer layer (32) is deformed in response to said impact event.

6. The component (24) as recited in any preceding claim, wherein at least a portion of said outer layer (32) is crushed in response to said impact event.

7. The component (24) as recited in any preceding claim, wherein at least a portion of said outer layer (32) is liberated in response to said impact event.

8. The component (24) as recited in any preceding claim, wherein said outer layer (32) includes a varied composition and structure throughout its thickness.

9. The component (24) as recited in any preceding claim, wherein said outer layer (32) is deposited at least on one of a leading edge (25) and a trailing edge (27) of said substrate (28).

10. A method of coating a component (24), comprising:
applying an outer layer (32) onto at least a portion of a thermal barrier coating of the component (24) using a suspension plasma spray (SPS) technique, wherein the outer layer (32) includes a material that absorbs energy in response to an impact event along a portion of the outer layer (32), wherein said thermal barrier coating (26) includes a first porosity and said outer layer (32) includes a second porosity that is greater than said first porosity, and wherein said thermal barrier coating (26) includes a first modulus of elasticity and said outer layer (32) includes a second modulus of elasticity that is a reduced modulus of elasticity as compared to said first modulus of elasticity.

11. The method as recited in claim 10, wherein the suspension plasma spray technique includes applying the outer layer (32) in a plurality of individual coating passes, wherein a first coating pass of the plurality of individual coating passes includes a first material process parameter and composition and a second coating pass of the plurality of individual coating passes includes a second material process parameter and composition that is different from the first material process parameter and composition.

12. The method as recited in claim 10 or 11, comprising the step of deforming at least a portion of the outer layer (32) in response to the impact event.

13. The method as recited in claim 10 or 11, comprising the step of crushing at least a portion of the outer layer (32) in response to the impact event.

14. The method as recited in claim 10 or 11, comprising the step of liberating at least a portion of the outer layer (32) in response to the impact event.

## Patentansprüche

1. Komponente (24), umfassend:
ein Substrat (28);
eine Wärmedämmschicht (26), die mindestens auf einem Teil des Substrats (28) aufgebracht ist; und
eine Außenschicht (32), die mindestens auf einem Teil der Wärmedämmschicht (26) aufgebracht ist, wobei die Außenschicht (32) ein Material umfasst, das Energie als Reaktion auf ein Stoßereignis entlang mindestens eines Teils der Außenschicht (32) absorbiert;
wobei die Wärmedämmschicht (26) eine erste Porosität umfasst und die Außenschicht (32) eine zweite Porosität umfasst, die größer als die erste Porosität ist,
**dadurch gekennzeichnet, dass**:
die Wärmedämmschicht (26) einen ersten Elastizitätsmodul aufweist und die Außenschicht (32) einen zweiten Elastizitätsmodul aufweist, der ein verringerter Elastizitätsmodul im Vergleich zum ersten Elastizitätsmodul ist; und
die Außenschicht (32) eine mit Suspensionen plasmagespritzte (SPS) Außenschicht ist.

2. Komponente (24) nach Anspruch 1, wobei das Material eine Zusammensetzung mit hoher Zähigkeit umfasst.

3. Komponente (24) nach Anspruch 1 oder 2, wobei das Material Hafniumoxid umfasst.

4. Komponente (24) nach einem der vorstehenden Ansprüche, wobei das Material ein auf Zirconiumoxid basierendes keramisches Material umfasst.

5. Komponente (24) nach einem der vorstehenden Ansprüche, wobei mindestens ein Teil der Außenschicht (32) als Reaktion auf das Stoßereignis verformt wird.

6. Komponente (24) nach einem der vorstehenden Ansprüche, wobei mindestens ein Teil der Außenschicht (32) als Reaktion auf das Stoßereignis zerdrückt wird.

7. Komponente (24) nach einem der vorstehenden Ansprüche, wobei mindestens ein Teil der Außenschicht (32) als Reaktion auf das Stoßereignis herausgelöst wird.

8. Komponente (24) nach einem der vorstehenden Ansprüche, wobei die Außenschicht (32) über ihre gesamte Dicke eine unterschiedliche Zusammensetzung und Struktur aufweist.

9. Komponente (24) nach einem der vorstehenden Ansprüche, wobei die Außenschicht (32) mindestens auf einem aus einer Vorderkante (25) und einer Hinterkante (27) des Substrats (28) aufgebracht wird.

10. Verfahren zum Beschichten einer Komponente (24), umfassend:
Aufbringen einer Außenschicht (32) auf mindestens einen Teil einer Wärmedämmschicht der Komponente (24) unter Anwendung einer Technik des Plasmaspritzens mit einer Suspension (SPS), wobei die Außenschicht (32) ein Material umfasst, das Energie als Reaktion auf ein Stoßereignis entlang eines Teils der Außenschicht (32) absorbiert, wobei die Wärmedämmschicht (26) eine erste Porosität umfasst und die Außenschicht (32) eine zweite Porosität umfasst, die größer als die erste Porosität ist, und wobei die Wärmedämmschicht (26) einen ersten Elastizitätsmodul aufweist und die Außenschicht (32) einen zweiten Elastizitätsmodul aufweist, der ein verringerter Elastizitätsmodul im Vergleich zum ersten Elastizitätsmodul ist.

11. Verfahren nach Anspruch 10, wobei die Technik des Plasmaspritzens mit einer Suspension das Aufbringen der Außenschicht (32) in einer Vielzahl einzelner Beschichtungsdurchgänge umfasst, wobei ein erster Beschichtungsdurchgang der Vielzahl einzelner Beschichtungsdurchgänge einen ersten wesentlichen Prozessparameter und eine erste Zusammensetzung umfasst und ein zweiter Beschichtungsdurchgang der Vielzahl einzelner Beschichtungsdurchgänge einen zweiten wesentlichen Prozessparameter und eine zweite Zusammensetzung umfasst, die sich von dem ersten wesentlichen Prozessparameter und der ersten Zusammensetzung unterscheiden.

12. Verfahren nach Anspruch 10 oder 11, umfassend den Schritt des Verformens zumindest eines Teils der Außenschicht (32) als Reaktion auf das Stoßereignis.

13. Verfahren nach Anspruch 10 oder 11, umfassend den Schritt des Zerdrückens zumindest eines Teils der Außenschicht (32) als Reaktion auf das Stoßereignis.

14. Verfahren nach Anspruch 10 oder 11, umfassend den Schritt des Herauslösens zumindest eines Teils der Außenschicht (32) als Reaktion auf das Stoßereignis.

## Revendications

1. Composant (24), comprenant :
un substrat (28) ;
un revêtement formant barrière thermique (26) déposé sur au moins une portion dudit substrat (28) ; et
une couche externe (32) déposée sur au moins une portion dudit revêtement formant barrière thermique (26), dans lequel ladite couche externe (32) inclut un matériau qui absorbe l'énergie en réponse à un événement d'impact le long d'au moins une portion de ladite couche externe (32) ;
ledit revêtement formant barrière thermique (26) inclut une première porosité et ladite couche externe (32) inclut une seconde porosité qui est supérieure à ladite première porosité,
**caractérisé en ce que** :
ledit revêtement formant barrière thermique (26) inclut un premier module d'élasticité et ladite couche externe (32) inclut un second module d'élasticité qui est un module d'élasticité réduit en comparaison audit premier module d'élasticité ; et
ladite couche externe (32) est une couche externe à pulvérisation de plasma en suspension (SPS).

2. Composant (24) selon la revendication 1, dans lequel ledit matériau inclut une composition de ténacité élevée.

3. Composant (24) selon la revendication 1 ou 2, dans lequel ledit matériau inclut de l'oxyde d'hafnium.

4. Composant (24) selon une quelconque revendication précédente, dans lequel ledit matériau inclut un matériau céramique à base d'oxyde de zirconium.

5. Composant (24) selon une quelconque revendication précédente, dans lequel au moins une portion de ladite couche externe (32) est déformée en réponse audit événement d'impact.

6. Composant (24) selon une quelconque revendication précédente, dans lequel au moins une portion de ladite couche externe (32) est écrasée en réponse audit événement d'impact.

7. Composant (24) selon une quelconque revendication précédente, dans lequel au moins une portion de ladite couche externe (32) est libérée en réponse audit événement d'impact.

8. Composant (24) selon une quelconque revendication précédente, dans lequel ladite couche externe (32) inclut une composition et une structure variées sur toute son épaisseur.

9. Composant (24) selon une quelconque revendication précédente, dans lequel ladite couche externe (32) est déposée sur au moins l'un d'un bord d'attaque (25) et d'un bord de fuite (27) dudit substrat (28).

10. Procédé de revêtement d'un composant (24), comprenant :
l'application d'une couche externe (32) sur au moins une portion d'un revêtement formant barrière thermique du composant (24) à l'aide d'une technique de pulvérisation de plasma en suspension (SPS), dans lequel la couche externe (32) inclut un matériau qui absorbe l'énergie en réponse à un événement d'impact le long d'une portion de la couche externe (32), dans lequel ledit revêtement formant barrière thermique (26) inclut une première porosité et ladite couche externe (32) inclut une seconde porosité qui est supérieure à ladite première porosité, et dans lequel ledit revêtement formant barrière thermique (26) inclut un premier module d'élasticité et ladite couche externe (32) inclut un second module d'élasticité qui est un module d'élasticité réduit en comparaison audit premier module d'élasticité.

11. Procédé selon la revendication 10, dans lequel la technique de pulvérisation de plasma en suspension inclut l'application de la couche externe (32) en une pluralité de passes de revêtement individuelles, dans lequel une première passe de revêtement de la pluralité de passes de revêtement individuelles inclut un premier paramètre de processus de matériau et une première composition et une seconde passe de revêtement de la pluralité de passes de revêtement individuelles inclut un second paramètre de processus de matériau et une seconde composition qui sont différents du premier paramètre de processus de matériau et de la première composition.

12. Procédé selon la revendication 10 ou 11, comprenant l'étape de déformation d'au moins une portion de la couche externe (32) en réponse à l'évènement d'impact.

13. Procédé selon la revendication 10 ou 11, comprenant l'étape d'écrasement d'au moins une portion de la couche externe (32) en réponse à l'évènement d'impact.

14. Procédé selon la revendication 10 ou 11, comprenant l'étape de libération d'au moins une portion de la couche externe (32) en réponse à l'évènement d'impact.
